# EUROPÄISCHE PATENTSCHRIFT

(11) **EP 1 746 678 B1**
(45) Veröffentlichungstag und Bekanntmachung des Hinweises auf die Patenterteilung: **06.06.2012**
(21) Anmeldenummer: 05015554.8
(22) Anmeldetag: 18.07.2005
(51) Int. Cl.: H01M 8/04, H01M 8/06

(54) **Verfahren zur Inertgas- und/oder Wasserentsorgung aus einer Brennstoffzellenanordnung sowie Brennstoffzellenanordnung**
Method for removing water and inert gases from a fuel cell assembly and fuel cell assembly
Procédé pour évacuation de l'eau et des gaz inertes dans un assemblage de piles à combustible et assemblage de piles à combustible

(43) Veröffentlichungstag der Anmeldung: 24.01.2007
(73) Patentinhaber: SIEMENS AKTIENGESELLSCHAFT, 80333 München (DE)
(72) Erfinder: Coerlin, Detlev, 91056 Erlangen (DE); Stühler, Walter, 96114 Hirschaid (DE); Voitlein, Ottmar, 91475 Lonnerstadt (DE)

(56) Entgegenhaltungen:
- EP-A- 1 406 332
- US-B1- 6 251 534
- US-B1- 6 821 668
- PATENT ABSTRACTS OF JAPAN Bd. 1995, Nr. 11, 26. Dezember 1995 (1995-12-26) & JP 07 230817 A (ISHIKAWAJIMA HARIMA HEAVY IND CO LTD), 29. August 1995 (1995-08-29)

## Beschreibung

Die Erfindung betrifft ein Verfahren zur Inertgas- und/oder Wasserentsorgung aus einer Brennstoffzellenanordnung gemäß Oberbegriff des Patentanspruchs 1 sowie eine Brennstoffzellenanordnung gemäß Oberbegriff des Patentanspruchs 8; ein derartiges Verfahren bzw. eine derartige Brennstoffzellenanordnung sind beispielsweise aus der EP 1 406 332 A1 bekannt.

In einer Brennstoffzelle wird üblicherweise durch die Zusammenführung von Wasserstoff und Sauerstoff in einer elektrochemischen Reaktion Energie und Wärme erzeugt, wobei als einziges Nebenprodukt Wasser entsteht. Zu diesem Zweck werden der Wasserstoff in einen Anodengasraum und der Sauerstoff in einen Kathodengasraum der Brennstoffzelle geleitet. Der Wasserstoff kann entweder als reiner Wasserstoff oder als ein wasserstoffhaltiges Brenngas dem Anodengasraum zugeführt werden. Der Sauerstoff kann als reiner Sauerstoff oder auch beispielsweise in Form von Luft dem Kathodengasraum zugeführt werden.

Selbst technisch reine Gase weisen Inertgasanteile auf, z.B. Anteile von Stickstoff, Kohlendioxid und Edelgasen. Werden Brennstoffzellen nacheinander von einem derartigen Gas durchströmt besteht das Problem, dass sich diese Inertgasanteile, sowie infolge der elektrochemischen Reaktion von Wasserstoff und Sauerstoff in den Brennstoffzellen gebildetes Produktwasser, in Strömungsrichtung des Gases durch die Brennstoffzellen aufkonzentrieren, was mit einem Absinken der Zellspannungen und daher mit Wirkungsgradverlusten in den Brennstoffzellen verbunden ist.

So ist z.B. aus der EP 0 596 366 B1 eine Brennstoffzellenanordnung mit mehreren Brennstoffzellengruppen bekannt, die über Leitungen derart miteinander verbunden sind, dass die anoden- und kathodenseitigen Betriebsgase die Brennstoffzellengruppen jeweils nacheinander durchströmen. Die einzelnen Brennstoffzellen einer Brennstoffzellengruppe werden hierbei jeweils parallel von dem Betriebsgas durchströmt. Sämtliche Brennstoffzellengruppen sind hierbei in einem einzigen Brennstoffzellenblock zusammengefasst. Durch eine Kaskadierung des Brennstoffzellenblocks, d.h. eine Abnahme der Anzahl der in den Zellgruppen in Strömungsrichtung des Betriebsgases jeweils parallel durchströmten Zellen, werden Inertgasanteile, und ggf. Produktwasser, in einer in Strömungsrichtung des Gases zuletzt angeordneten Zellgruppe aufkonzentriert, von wo sie aus dem Brennstoffzellenblock ausgetragen werden. Wirkungsgradverluste können hierdurch auf die letzte Zellgruppe beschränkt werden.

Das Austragen des Inertgases, sowie ggf. des Produktwassers, aus der letzten Zellgruppe und somit aus dem Brennstoffzellenblock erfolgt hierbei durch Spülen der letzten Zellgruppe mit Gas aus der vorletzten Zellgruppe. Die Zellen der letzten Zellgruppe werden deshalb auch als "Spülzellen" bezeichnet. Üblicherweise weist die letzte Zellgruppe gasausgangsseitig eine Restgasabfuhrleitung mit einem Absperrventil auf. Dieses Ventil ist normalerweise geschlossen, d.h. kein Inertgas und/oder Wasser kann die letzte Zellgruppe verlassen, wodurch sich die Inertgasanteile und ggf. das Produktwasser in den Spülzellen ansammeln können. Erst wenn die Spannung der Spülzellen einen vordefinierten Wert unterschreitet, wird das Absperrventil geöffnet und das Gas der vorletzten Zellgruppe drückt die Inertgase, möglicherweise vorhandenes Wasser sowie möglicherweise noch vorhandene reaktionsfähiges Betriebsgas aus der letzten Zellgruppe.

Aus der EP 1 406 332 A1 geht ein Verfahren zur Beseitigung von Verunreinigungen aus einer von einem Gas durchströmten Brennstoffzellenanordnung hervor, bei dem einer letzten Brennstoffzelle periodisch Gas zugeführt wird und gleichzeitig Gas aus der letzten Brennstoffzelle ausgetragen wird. Aufgabe vorliegender Erfindung ist es, ein Verfahren zur Inertgas- und/oder Wasserentsorgung und eine Brennstoffzellenanordnung anzugeben, die es erlauben, mit geringem Aufwand die Effektivität der Inertgas- und/oder Wasserentsorgung noch weiter zu verbessern.

Die auf das Verfahren gerichtete Aufgabe wird gelöst durch ein Verfahren mit den Merkmalen des Patentanspruches 1. Die auf die Brennstoffzellenanordnung gerichtete Aufgabe wird gelöst durch eine Brennstoffzellenanordnung mit den Merkmalen des Patentanspruchs 9. Vorteilhafte Ausgestaltungen sind jeweils Gegenstand der Unteransprüche.

Die Erfindung geht hierbei von der Überlegung aus, dass das bisher für die Spülung der letzten Zellgruppe verwendete Gas der vorletzten Zellgruppe bereits stark mit Inertgas angereichert (z.B. bis zu 30 Vol% Inertgas bei Verwendung von Sauerstoff der Klasse 2.5) und mit Wasserdampf gesättigt ist. Außerdem ist der Druck dieses Gases auf Grund der vorgeschalteten Zellgruppen und eventuell zusätzlicher Einrichtungen (z.B. Gasbefeuchtungseinrichtungen) im Vergleich zu dem der ersten Zellgruppe zugeführten Gas bereits deutlich reduziert.

Das erfindungsgemäße Verfahren sieht deshalb vor, dass für das Austragen der Inertgase und/oder des Wassers aus der letzten Zellgruppe und somit aus der Brennstoffzellenanordnung der letzten Zellgruppe ein zweites Gas zugeführt wird. Die Zuführung des zweiten Gases zu der zuletzt angeordneten Zellgruppe und das Austragen des Inertgas- und/oder Wasseranteils erfolgen hierbei zeitlich versetzt. Durch geeignete Wahl der Parameter dieses zweiten Gases, z.B. von Zusammensetzung, Temperatur und Druck des zweiten Gases, kann die Spülung der letzten Zellgruppe und somit das Austragen des Inertgases und/oder Wassers aus der Brennstoffzellenanordnung auf einfache Weise verbessert werden.

Durch einen im Vergleich zu dem Gas der vorletzten Zellgruppe höheren Druck kann eine höhere Druckdifferenz über der letzten Zellgruppe und somit ein schnelleres Austragen des Inertgases sowie ein schnellerer Wasserabtransport erzielt werden.

Durch einen im Vergleich zu dem Gas der vorletzten Zellgruppe geringere Feuchtigkeit, insbesondere bei Verwendung eines nahezu trockenen Gases, kann der Wasserabtransport verbessert und es können im Fall von PEM-Brennstoffzellen feuchte Bereiche in den Membran-Elektrodeneinheiten regeneriert werden.

Bei Verwendung eines Gases mit im Vergleich zu dem Gas der vorletzten Zellgruppe weniger Inertgasanteilen kann ein besserer Inertgasabtransport erzielt werden. Zusätzlich können aufgrund des "Stripping-Effektes" im Fall von PEM-Brennstoffzellen Bereiche der Membran-Elektrodeneinheiten mit adsorbiertem Inertgas regeneriert werden.

Wenn als zweites Gas ein Gas mit einem im Vergleich zu dem Gas der vorletzten Zellgruppe größerem Betriebsgasanteil verwendet wird, kann zudem das Startverhalten der letzten Zellgruppe beim Anfahren der Brennstoffzellenanordnung verbessert werden. Dies gilt auch für das Lastwechselverhalten bei einem Sprung von einer niedrigen zu einer hohen Last, da aufgrund des im Vergleich zu dem Gas der vorletzten Zellgruppe größeren Betriebsgasanteils starke Spannungseinbrüche an der letzten Zellgruppe vermieden werden können.

Sämtliche vorgenannten Vorteile können durch die Zuführung eines geeignet gewählten zweiten Gases zu der zuletzt angeordneten Zellgruppe zum Austragen des Inertgases und/oder Wassers und somit mit einem sehr geringen Aufwand erzielt werden.

Bevorzugt sind das der in Strömungsrichtung des ersten Gases zuerst angeordneten Zellgruppe zugeführte erste Gas und das zweite Gas hinsichtlich ihrer Zusammensetzung gleich. Dies kann mit besonders geringem Aufwand dadurch ermöglicht werden, dass das erste Gas und das zweite Gas aus einer gemeinsamen Gasversorgung bezogen werden.

Die Zuführung des zweiten Gases zu der zuletzt angeordneten Zellgruppe und das Austragen des Inertgas- und/oder Wasseranteils können auch impulsförmig erfolgen.

Weiterhin kann die Zuführung des zweiten Gases zu der zuletzt angeordneten Zellgruppe und das Austragen des Inertgas-und/oder Wasseranteils zwischen jeweils einer Anzahl von Austragungen des Inertgas- und/oder Wasseranteils durch Zuführung von Gas aus der zuletzt angeordneten Zellgruppe erfolgen.

Eine erfindungsgemäßen Brennstoffzellenanordnung weist zumindest zwei Brennstoffzellengruppen auf, die derart miteinander verbunden sind, dass die Zellgruppen für ein erstes Gas nacheinander durchströmbar sind, wobei ein sich in Strömungsrichtung des ersten Gases durch die Brennstoffzellengruppen aufkonzentrierender Wasser- und/oder Inertgasanteil in dem ersten Gas aus der Brennstoffzellenanordnung austragbar ist. Hierbei ist zum Austragen des Inertgas- und/oder Wasseranteiles aus der Brennstoffzellenanordnung der in Strömungsrichtung des ersten Gases zuletzt angeordneten Zellgruppe durch Öffnen eines ersten Ventils ein zweites Gas zuführbar, wobei der Inertgas- und/oder Wasseranteil in dem ersten Gas durch Öffnen eines zweiten Ventils aus der Brennstoffzellenanordnung ausgetragen wird. Vorgesehen ist eine Steuerungseinrichtung zur Steuerung der Öffnung der beiden Ventile derart, dass zum Austragen des Inertgas- und/oder Wasseranteils aus der Brennstoffzellenanordnung das erste Ventil zeitlich vor dem zweiten Ventil geöffnet wird.

Die für das erfindungsgemäße Verfahren genannten Vorteile gelten entsprechend für die erfindungsgemäße Brennstoffzellenanordnung.

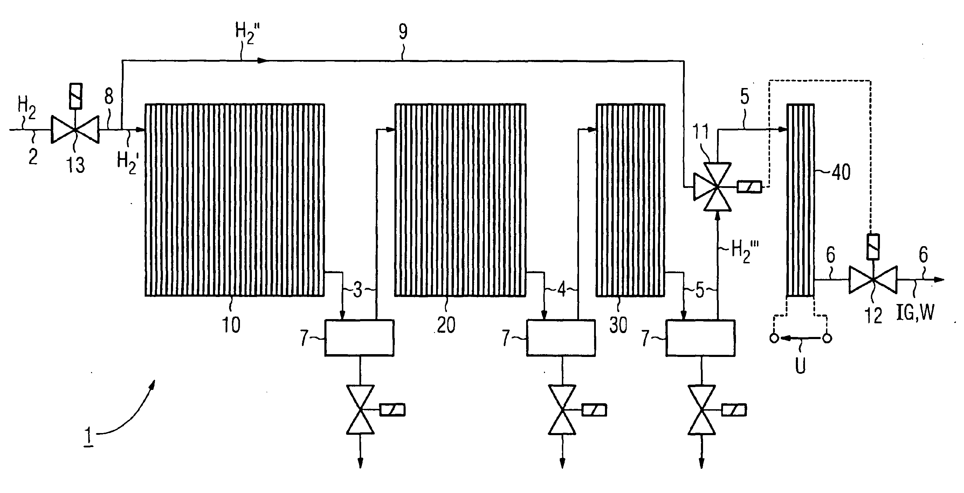

Die Erfindung sowie weitere vorteilhafte Ausgestaltungen der Erfindung gemäß Merkmalen der Unteransprüche werden im Folgenden anhand von Ausführungsbeispielen in der Figur näher erläutert.

Die Figur zeigt eine Brennstoffzellenanordnung 1, die vier Brennstoffzellengruppen 10, 20, 30, 40 umfasst. Die Brennstoffzellengruppen 10, 20, 30, 40 können in einem einzigen Brennstoffzellenblock integriert sein oder aber auf mehrere Brennstoffzellenblöcke verteilt sein.

Sämtliche Brennstoffzellen einer Brennstoffzellengruppe 10, 20, 30, 40 sind parallel von einem Gas durchströmbar, d.h. sämtliche Kathodengasräume der Brennstoffzellen sind parallel von einem kathodenseitigen Betriebsgas, z.B. Sauerstoff, und sämtliche Anodengasräume der Brennstoffzellen von einem anodenseitigen Betriebsgas, z.B. Wasserstoff, durchströmbar. Zur Vereinfachung der Darstellung sind in der Figur nur die Anodengasräume dargestellt.

Die Anzahl der innerhalb einer Zellgruppe parallel durchströmten Brennstoffzellen nimmt in Strömungsrichtung des kathoden- bzw. anodenseitigen Betriebsgases im Sinne einer Kaskadierung ab.

Die Zellgruppen 10, 20, 30, 40 sind über Leitungen 3, 4, 5 derart miteinander verbunden, dass ein der ersten Zellgruppe 10 zugeführtes erstes Gas, hier Wasserstoff H2', nacheinander die Zellgruppen 10, 20, 30, 40 der Brennstoffzellenanordnung 1 durchströmen kann. In die Leitungen 3, 4, 5 sind zur Abscheidung von Wasser aus dem ersten Gas H2' jeweils Wasserabscheider 7 geschaltet.

Der in Strömungsrichtung des Gases H2' zuletzt angeordneten Zellgruppe 40 sind über ein Ventil 11 und die Leitung 5 zum einen das die vorletzte Zellgruppe verlassende erste Gas H2''' und zum anderen über eine Leitung 9 ein zweites Gas H2", hier ebenfalls Wasserstoff, zuführbar.

Über eine Gasentsorgungsleitung 6 ist das in der letzten Zellgruppe 40 vorhandenes Restgas, d.h. Inertgas IG, möglicherweise noch vorhandenes reaktionsfähiges Betriebsgas, sowie möglicherweise vorhandenes Wasser W, aus der letzten Zellgruppe 40 austragbar. Zur Steuerung der Restgasentsorgung ist in die Gasentsorgungsleitung 6 ein Ventil 12 geschaltet.

Die Zellgruppe 10 ist über eine Gasversorgungsleitung 8 und die Zellgruppe 40 über die Gasversorgungsleitung 9 mit einer gemeinsamen Gasversorgungseinrichtung, hier der Gasversorgungsleitung 2, für ein Frischgas H2 verbunden. Das erste Gas H2' und das zweite Gas H2" weisen somit die gleiche Zusammensetzung auf. Zur Regelung der Zufuhr an Frischgas H2 ist in die Gasversorgungsleitung 2 ein Stellventil 13 geschaltet.

Beim Betrieb der Brennstoffzellenanordnung 1 wird der ersten Zellgruppe 10 bei geöffnetem Ventile 13 aus der Gasversorgungsleitung 2 über die Leitung 8 frisches Betriebsgas H2' zugeführt. Das Betriebsgas H2' durchströmt nacheinander die Zellgruppen 10, 20 und 30 und wird dann über das Ventil 11 der letzten Zellgruppe zugeführt. In den Zellgruppen 10, 20, 30, 40 wird der reaktionsfähige Betriebsgasanteil an dem Gas H2' verbraucht und somit die Inertgasanteile in dem Gas H2' aufkonzentriert.

Für die Aufkonzentration der Inertgasanteile in der letzten Zellgruppe 40 ist das Ventil 12 geschlossen. Durch die Zunahme des Inertgasanteils und ggf. von Wasser fällt die Zellspannung U an der letzten Zellgruppe ab. Nach Erreichen eines vordefinierten Grenzwertes wird deshalb das in der Zellgruppe 40 befindliche Restgas aus der Zellgruppe 40 und somit aus der Brennstoffzellenanordnung 1 ausgetragen. Hierzu wird das Ventil 11 für die Zuführung von Gas aus der vorletzten Zellgruppe geschlossen und für die Zuführung von frischem Betriebsgas H2" über die Leitung 9 geöffnet. Da das frische Betriebsgas H2" eine höheren Druck, eine geringere Feuchtigkeit und einen höheren Betriebsgasanteil als das Betriebsgas H2''' der vorletzten Zellgruppe 30 aufweist, kann die letzte Zellgruppe schneller und wirkungsvoller als bisher "gespült" werden, d.h. das Inertgas und das Wasser der letzten Zellgruppe 40 wesentlich schneller und wirkungsvoller aus der letzten Zellgruppe 40 ausgetragen werden. Nach erfolgter Spülung der Tellgruppe 40 kann die Zufuhr an frischem Betriebsgas H2'' über die Leitung 9 durch das Ventil 11 wieder unterbrochen und die Zufuhr an Betriebsgas H2"' über die Leitung 5 aus der vorletzten Zellgruppe 30 wieder aufgenommen werden.

Das Ventil 11 wird zeitlich vor dem Ventil 12 geöffnet, d.h. die Zuführung des frischem Betriebsgases H2" zu der Zellgruppe 40 und das Austragen des Inertgases IG und des Wassers W aus der Zellgruppe 40 erfolgen zeitlich versetzt.

Für die Ansteuerung der Ventile 11 und 12 und somit die Steuerung der Zufuhr des frischen Betriebsgases H2" zu der Zellgruppe 40 und die Steuerung der Abfuhr des Inertgases IG und des Wassers W aus der Zellgruppe 40 gibt es ergänzend verschiedene Möglichkeiten:
a) Das Ventil 11 wird bei gleichzeitig geöffnetem Ventil 12 mehrfach geöffnet und geschlossen, d.h. die Zuführung des frischen Betriebsgases H2" zum Austragen des Inertgases IG und des Wassers W erfolgen impulsförmig.
b) Die Zuführung des frischen Betriebsgases H2" zum Austragen des Inertgases IG und des Wassers W erfolgt zwischen jeweils einer Anzahl von Austragungen des Inertgases IG und des Wassers W durch Gas H2" aus der vorletzten Zellgruppe 30.

Das hierzu notwendige Öffnen und Schließen der Ventile 11 und 12 und somit das Austragen des Inertgases IG und des Wassers W kann, beispielsweise in Abhängigkeit von der Spannung der letzten Zellgruppe 40, sowohl automatisiert unter Steuerung einer nicht näher dargestellten zentralen Steuervorrichtung als auch durch eine manuelle Betätigung erfolgen.

## Patentansprüche

1. Verfahren zur Inertgas- und/oder Wasserentsorgung aus einer Brennstoffzellenanordnung (1) mit zumindest zwei Brennstoffzellengruppen (10, 20, 30, 40), die nacheinander von einem ersten Gas (H2') durchströmt werden, wobei ein Inertgas-und/oder Wasseranteil (IG bzw. W) in dem ersten Gas (H2') in Strömungsrichtung des ersten Gases (H2') durch die Brennstoffzellengruppen (10, 20, 30, 40) aufkonzentriert und anschließend aus der Brennstoffzellenanordnung (1) ausgetragen wird, wobei zum Austragen des Inertgas- und/oder Wasseranteiles (IG bzw. W) aus der Brennstoffzellenanordnung (1) der in Strömungsrichtung des ersten Gases zuletzt angeordneten Zellgruppe (40) durch Öffnen eines ersten Ventils (11) ein zweites Gas (H2") zugeführt wird, wobei der Inertgas- und/oder Wasseranteil (IG bzw. W) in dem ersten Gas (H2') durch Öffnen eines zweiten Ventils (12) aus der Brennstoffzellenanordnung (1) ausgetragen wird, **dadurch gekennzeichnet, dass** zum Austragen des Inertgas- und/oder Wasseranteils (IG bzw. W) aus der Brennstoffzellenanordnung (1) das erste Ventil (11) zeitlich vor dem zweiten Ventil (12) geöffnet wird.

2. Verfahren nach Anspruch 1,
**dadurch gekennzeichnet, dass** das der in Strömungsrichtung des ersten Gases (H2') zuerst angeordneten Zellgruppe (10) zugeführte erste Gas (H2') und das zweite Gas (H'') hinsichtlich ihrer Zusammensetzung gleich sind.

3. Verfahren nach einem der vorhergehenden Ansprüche,
**dadurch gekennzeichnet, dass** das erste Gas (H') und das zweite Gas (H') aus einer gemeinsamen Gasversorgung (2) bezogen werden.

4. Verfahren nach einem der Ansprüche 1 bis 3,
**dadurch gekennzeichnet, dass** die Zuführung des zweiten Gases (H2'') zu der zuletzt angeordneten Zellgruppe (40) und das Austragen des Inertgas- und/oder Wasseranteils (IG bzw. W) zeitlich versetzt erfolgen.

5. Verfahren nach einem der vorhergehenden Ansprüche,
**dadurch gekennzeichnet, dass** die Zuführung des zweiten Gases (H2") zu der zuletzt angeordneten Zellgruppe (40) und das Austragen des Inertgas- und/oder Wasseranteils (IG bzw. W)) impulsförmig erfolgen.

6. Verfahren nach einem der vorhergehenden Ansprüche,
**dadurch gekennzeichnet, dass** die Zuführung des zweiten Gases (H2'') zu der zuletzt angeordneten Zellgruppe (40) und das Austragen des Inertgas- und/oder Wasseranteils (IG bzw. W) zwischen jeweils einer Anzahl von Austragungen des Inertgas-und/oder Wasseranteils (IG bzw. W) durch Zuführung von Gas (H2"') aus der zuletzt angeordneten Zellgruppe (40) erfolgt.

7. Verfahren nach einem der vorhergehenden Ansprüche,
**dadurch gekennzeichnet, dass** das Austragen des Inertgas-und/oder Wasseranteils (IG bzw. W) in Abhängigkeit von der Brennstoffzellenspannung (U) der zuletzt angeordneten Zellgruppe (40) erfolgt.

8. Brennstoffzellenanordnung (1) mit zumindest zwei Brennstoffzellengruppen (10, 20, 30, 40), die derart miteinander verbunden sind, dass die Zellgruppen (10, 20, 30, 40) für ein erstes Gas (H2') nacheinander durchströmbar sind, wobei ein sich in Strömungsrichtung des ersten Gases durch die Brennstoffzellengruppen (10, 20, 30, 40), aufkonzentrierender Inertgas- und/oder Wasseranteil (IG bzw. W) in dem ersten Gas (H2') aus der Brennstoffzellenanordnung (1) austragbar ist, wobei zum Austragen des Inertgas- und/oder Wasseranteils (IG bzw. W) aus der Brennstoffzellenanordnung (1) der in Strömungsrichtung des ersten Gases zuletzt angeordneten Zellgruppe (40) ein zweites Gas (H2") zuführbar ist, wobei die zuletzt angeordnete Zellgruppe (40) gaseingangsseitig ein erstes Ventil (11) zur Zuführung des zweiten Gases (H2") zu der zuletzt angeordneten Brennstoffzellengruppe (40) und gasausgangsseitig ein zweites Ventil (12) zum Austragen des Inertgas- und/oder Wasseranteils (IG bzw. W) aufweist, **gekennzeichnet durch** eine Steuerungseinrichtung zur Steuerung der Öffnung der beiden Ventile (11, 12) derart, dass zum Austragen des Inertgas- und/oder Wasseranteils (IG bzw. W) aus der Brennstoffzellenanordnung (1) das erste Ventil (11) zeitlich vor dem zweiten Ventil (12) geöffnet wird.

9. Brennstoffzellenanordnung nach Anspruch 8,
**dadurch gekennzeichnet, dass** das der in Strömungsrichtung des ersten Gases (H2') zuerst angeordneten Zellgruppe (10) zugeführte erste Gas (H2') und das zweite Gas (H'') hinsichtlich ihrer Zusammensetzung gleich sind.

10. Brennstoffzellenanordnung nach einem der Ansprüche 8 bis 9, **dadurch gekennzeichnet, dass** die in Strömungsrichtung des ersten Gases (H2') zuerst angeordnete Zellgruppe (10) und die in Strömungsrichtung des ersten Gases (H2') zuletzt angeordnete Zellgruppe (40) gaseingangsseitig mit einer gemeinsamen Gasversorgungseinrichtung (2) verbunden sind.

## Claims

1. Method for removing water and/or inert gases from a fuel cell assembly (1) with at least two fuel cell groups (10, 20, 30, 40), through each of which in turn a first gas (H2') flows, wherein a proportion of inert gas and/or water (IG or W respectively) concentrates in the first gas (H2') in the flow direction of the first gas (H2') through the fuel cell groups (10, 20, 30, 40) and is subsequently removed from the fuel cell arrangement (1), wherein for removal of the proportion of inert gas or water (IG or W respectively) from the fuel cell arrangement (1) the cell group (40) disposed last in the flow direction of the first gas is supplied with a second gas (H2") by opening of a first valve (11), wherein the proportion of inert gas or water (IG or W respectively) in the first gas (H2') is removed from the fuel cell arrangement (1) by opening of a second valve (12), **characterised in that**, to remove the proportion of inert gas or water (IG or W respectively) from the fuel cell arrangement (1) the opening time of the first valve (11) is before that of the second valve (12).

2. Method according to claim 1,
**characterised in that** the first gas (H2') supplied to the first cell group (10) in the arrangement in the flow direction of the first gas (H2') and the second gas (H") are identical in respect of their composition.

3. Method according to one of the preceding claims,
**characterised in that** the first gas (H') and the second gas (H') are obtained from a common gas supply (2).

4. Method according to one of claims 1 to 3,
**characterised in that** the supply of the second gas (H2") to the last cell group (40) in the arrangement and the removal of the proportion of inert gas and/or water (IG or W respectively) are undertaken offset in time.

5. Method according to one of the preceding claims,
**characterised in that** the supply of the second gas (H2") to the last cell group (40) in the arrangement and the removal of the proportion of inert gas and/or water (IG or W respectively) are undertaken in a pulsed manner.

6. Method according to one of the preceding claims,
**characterised in that** the supply of the second gas (H2") to the cell group (40) disposed last and the removal of the proportion of inert gas and/or water (IG or W respectively) are undertaken in each case between a number of removals of the proportion of inert gas and/or water (IG or W) by supplying gas (H2"') from the last cell group (40) in the arrangement.

7. Method according to one of the preceding claims,
**characterised in that** the removal of the proportion of inert gas and/or water (IG or W respectively) is undertaken as a function of a fuel cell voltage (U) of the last cell group (40) in the arrangement.

8. Fuel cell arrangement (1) with at least two fuel cell groups (10, 20, 30, 40), which are connected to one another such that a first gas (H2') is able to flow through the cell groups (10, 20, 30, 40) one after another, whereby a proportion of inert gas or water(IG or W respectively) concentrating in the direction of flow through the fuel cell groups (10, 20, 30, 40) in the first gas (H2') is able to be removed from the fuel cell arrangement (1) wherein, for removal of the proportion of inert gas and/or water (IG or W respectively) from the fuel cell arrangement (1), a second gas (H2') is able to be supplied to the last cell group (40) of the arrangement in the direction of flow, wherein the last cell group (40) of the arrangement has a valve (11) on the gas inlet side to supply the second gas (H2") to the last fuel cell group (40) in the arrangement and has a second valve (12) on the gas outlet side for removing the proportion of inert gas and/or water (IG or W respectively), **characterised by** a control device for controlling the opening of the two valves (11, 12) such that, to remove the proportion of inert gas and/or water (IG or W respectively) from the fuel cell arrangement (1) the first valve (11) is timed to open before the second valve (12).

9. Fuel cell arrangement (1) according to claim 8,
**characterised in that** the first gas (H2') supplied to the first cell group (10) in the arrangement in the flow direction of the first gas (H2') and the second gas (H") are identical in respect of their composition.

10. Fuel cell arrangement (1) according to one of claims 8 to 9, **characterised in that** the first cell group (10) in the arrangement in the flow direction of the first gas (H2') and the last cell group (40) in the arrangement in the flow direction of the first gas (H2') are connected to a common gas supply device (2) on the gas inlet side.

## Revendications

1. Procédé d'évacuation de gaz inerte et/ou d'eau d'un assemblage ( 1 ) de piles à combustible ayant au moins deux groupes ( 10, 20, 30, 40 ) de piles à combustible, qui sont parcourus les uns après les autres par un premier gaz ( H2' ), une proportion (IG ou W ) de gaz inerte et/ou d'eau du premier gaz ( H2' ) étant concentrée dans le sens d'écoulement du premier gaz ( H2' ) par les groupes ( 10, 20, 30, 40 ) de piles à combustible et étant ensuite extraite de l'assemblage ( 1 ) de piles à combustible, dans lequel, pour extraire la proportion ( IG ou W ) de gaz inerte et/ou d'eau de l'assemblage ( 1 ) de piles à combustible, on envoie au groupe ( 40 ) de piles disposé en dernier dans le sens d'écoulement du premier gaz par ouverture d'une première vanne ( 11 ) un deuxième gaz ( H2" ), la proportion ( IG ou W ) de gaz inerte et/ou d'eau du premier gaz ( H2' ) étant extraite de l'assemblage ( 1 ) de piles à combustible par ouverture d'une deuxième vanne ( 12 ), **caractérisé en ce que**, pour l'extraction de la proportion ( IG ou W ) de gaz inerte et/ou d'eau de 1"assemblage ( 1 ) de piles à combustible, on ouvre la première vanne ( 11 ) dans le temps avant la deuxième vanne ( 12 ).

2. Procédé suivant la revendication 1,
**caractérisé en ce que** le premier gaz ( H2' ) envoyé au groupe ( 10 ) de piles disposé le premier dans le sens d'écoulement du premier gaz ( H2' ) et le deuxième gaz ( H " ) sont identiques en ce qui concerne leur composition.

3. Procédé suivant l'une des revendications précédentes,
**caractérisé en ce que** le premier gaz ( H' ) et le deuxième gaz ( H" ) sont fournis par une alimentation commune en gaz.

4. Procédé suivant l'une des revendications 1 à 3,
**caractérisé en ce que** l'envoi du deuxième gaz ( H2" ) au groupe ( 10 ) de piles disposé en dernier et l'extraction de la proportion ( IG ou W ) de gaz inerte et/ou d'eau s'effectuent d'une manière décalée dans le temps.

5. Procédé suivant l'une des revendications précédentes,
**caractérisé en ce que** l'envoi du deuxième gaz ( H2" ) au groupe ( 40 ) de piles disposé en dernier et l'extraction de la proportion ( IG ou W ) de gaz inerte et/ou d'eau s'effectuent sous forme pulsée.

6. Procédé suivant l'une des revendications précédentes,
**caractérisé en ce que** l'envoi du deuxième gaz ( H2" ) au groupe ( 40 ) de piles disposé en dernier et l'extraction de la proportion ( IG ou W ) de gaz inerte et/ou d'eau s'effectuent entre respectivement un nombre d'extractions de la proportion ( IG ou W ) de gaz inerte et/ou d'eau par envoi de gaz ( H2"' ) provenant du groupe ( 40 ) de piles disposé en dernier.

7. Procédé suivant l'une des revendications précédentes,
**caractérisé en ce que** l'extraction de la proportion ( IG ou W ) de gaz inerte et/ou d'eau s'effectue en fonction de la tension ( U ) de piles à combustible du groupe ( 40 ) de piles disposé en dernier.

8. Assemblage ( 1 ) de piles à combustible ayant au moins deux groupes ( 10, 20, 30, 40 ) de piles à combustible, qui sont reliés entre eux, de manière à ce que les groupes ( 10, 20, 30, 40 ) de piles puissent être parcourus les uns après les autres par un premier gaz ( H2' ), une proportion ( IG ou W ) de gaz inerte et/ou d'eau du premier gaz ( H2' ) se concentrant dans la direction d'écoulement du premier gaz dans les groupes ( 10, 20, 30, 40 ) de piles à combustible pouvant être extraites de l'assemblage ( 1 ) de piles à combustible, dans lequel, pour l'extraction de la proportion ( IG ou W ) de gaz inerte et/ou d'eau de l'assemblage ( 1 ) de piles à combustible, un deuxième gaz ( H2" ) peut être envoyé au groupe ( 40 ) de piles disposé en dernier dans le sens d'écoulement du premier gaz, le groupe ( 40 ) de piles disposé en dernier ayant, du côté de l'entrée du gaz, une première vanne ( 11 ) pour l'envoi du deuxième gaz ( H2" ) au groupe ( 40 ) de piles à combustible disposé en dernier et du côté de la sortie du gaz, une deuxième vanne ( 12 ) pour l'extraction de la proportion ( IG ou W ) de gaz inerte et/ou d'eau, **caractérisé par** un dispositif de commande pour la commande de l'ouverture des deux vannes ( 11, 12 ), de manière à ce que, pour l'extraction de la proportion ( IG ou W ) de gaz inerte et/ou d'eau de l'assemblage ( 1 ) de piles à combustible, la première vanne ( 11 ) soit ouverte dans le temps avant la deuxième vanne ( 12 ).

9. Assemblage de piles à combustible suivant la revendication 8,
**caractérisé en ce que** le premier gaz ( H2' ) envoyé au groupe ( 10 ) de piles disposé le premier dans le sens d'écoulement du premier gaz ( H2' ) et le deuxième gaz ( H " ) sont identiques en ce qui concerne leur composition.

10. Assemblage de piles à combustible suivant l'une des revendications 8 à 9, **caractérisé en ce que** le groupe ( 10 ) de piles disposé en dernier dans le sens d'écoulement du premier gaz ( H2' ) et le groupe ( 40 ) de piles disposé en dernier dans le sens d'écoulement du premier gaz ( H2' ) communiquent du côté de l'entrée du gaz avec un dispositif ( 2 ) commun d'alimentation en gaz.
